# EUROPÄISCHE PATENTANMELDUNG

(11) **EP 1 676 757 A2**
(43) Veröffentlichungstag der Anmeldung: **05.07.2006**
(21) Anmeldenummer: 05025769.0
(22) Anmeldetag: 25.11.2005
(51) Int. Cl.: B60R 21/16

(54) **Vorrichtung und Verfahren zum Falten eines Gassacks**

(30) Priorität: 02.12.2004 DE 102004058203; 21.03.2005 DE 102005013010
(71) Anmelder: TRW Automotive Safety Systems GmbH, 63743 Aschaffenburg (DE)
(72) Erfinder: Heimberger, Manfred, 63857 Waldaschaff (DE); Herbig, Marko, 02763 Zittau (DE); Gaiser, Ulrich, 73575 Mulfingen (DE); Orth, Lothar, 63741 Aschaffenburg (DE); Magoley, Markus, Dr., 63739 Aschaffenburg (DE); Schütz, Dominik, 63857 Waldaschaff (DE); Zygmunciak, Slawomir, 42-200 Czestochowa (PL)
(74) Vertreter: Strass, Jürgen

(57) **Zusammenfassung**

Eine Vorrichtung zum Falten eines Gassacks (10) umfaßt eine Positioniereinrichtung für den Gassack (10) mit einer Rohr-Faltvorrichtung (32). Die Positioniereinrichtung positioniert den Gassack (10) so, daß der Gassack (10) bei einer axialen Bewegung der Rohr-Faltvorrichtung (32) über die Rohr-Faltvorrichtung (32) gestülpt bzw. umgestülpt wird. Ein Verfahren zur Faltung eines mit einem Einblasmund versehenen Gassacks (10) mit einer solchen Vorrichtung weist folgende Schritte auf:
- Positionieren der Rohr-Faltvorrichtung (32) auf der dem Einblasmund entgegengesetzten Seite des Gassacks (10);
- axiales Verschieben der Rohr-Faltvorrichtung (32) durch den Einblasmund, so daß sich der Gassack (10) über die Rohr-Faltvorrichtung (32) stülpt bzw. umstülpt; und
- Herausziehen der Rohr-Faltvorrichtung (32) aus dem Einblasmund.

## Beschreibung

Die Erfindung betrifft eine Vorrichtung und ein Verfahren zum Falten eines Gassacks. Die Erfindung betrifft ferner ein Verfahren zur Montage eines Gassackmoduls und ein gemäß diesem Verfahren montiertes Gassackmodul.

Es sind zahlreiche Verfahren zur Faltung eines Gassacks bekannt, die bei der Positionierung eines Gassacks in eine Aufnahme eines Gassackmoduls verwendet werden. In der Regel wird der Gassack bei der Montage des Moduls mit einem Gassackhalteblech oder einem Flansch des Gasgenerators des Moduls durch Schrauben oder Niete gegen einen Gasgeneratorträger geklemmt. Dies erfordert Handarbeit und zusätzlichen Zeit-, Material-, Werkzeug- und damit Kostenaufwand.

Die Erfindung ermöglicht eine automatisierte Gassackmodulmontage, wobei insbesondere die Gassackfaltung und -befestigung in den automatisierten Montageprozeß eingebettet werden können.

Gemäß der Erfindung ist hierzu eine Vorrichtung zum Falten eines Gassacks mit einer Positioniereinrichtung für den Gassack und einer Rohr-Faltvorrichtung vorgesehen, wobei die Positioniereinrichtung den Gassack so positioniert, daß der Gassack bei einer axialen Verschiebung der Rohr-Faltvorrichtung über die Rohr-Faltvorrichtung gestülpt bzw. umgestülpt wird.

Bei einer bevorzugten Ausführungsform der erfindungsgemäßen Vorrichtung weist die Rohr-Faltvorrichtung ein Außenrohr mit mehreren Bohrungen auf und ist an eine Saugpumpe anschließbar.

Die Erfindung schafft ferner ein Verfahren zur Faltung eines mit einem Einblasmund versehenen Gassacks mit einer erfindungsgemäßen Vorrichtung, wobei das Verfahren folgende Schritte aufweist:
- Positionieren der Rohr-Faltvorrichtung auf der dem Einblasmund entgegengesetzten Seite des Gassacks;
- axiales Verschieben der Rohr-Faltvorrichtung durch den Einblasmund, so daß sich der Gassack über die Rohr-Faltvorrichtung stülpt bzw. umstülpt; und
- Herausziehen der Rohr-Faltvorrichtung aus dem Einblasmund.

Bei einer bevorzugten Ausführungsforrn des erfindungsgemäßen Verfahrens wird vor dem Herausziehen der Rohr-Faltvorrichtung im Gassack vorhandene Luft abgesaugt, insbesondere durch die Rohr-Faltvorrichtung.

Die Erfindung sieht auch ein Verfahren zur Montage eines Gassackmoduls vor, bei dem der Gassack nach dem erfindungsgemäßen Verfahren gefaltet wird, wobei durch das axiale Verschieben der Rohr-Faltvorrichtung der Gassack durch eine Öffnung in eine Aufnahme, vorzugsweise einen Gasgeneratorträger, hineingeschoben wird.

Schließlich schafft die Erfindung auch ein Gassackmodul, das gemäß diesem Verfahren montiert ist.

Vorteilhafte und zweckmäßige Ausgestaltungen und Weiterbildungen der Erfindung sind in den jeweiligen Unteransprüchen angegegeben.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figuren 1 bis 6 verschiedene aufeinanderfolgende Schritte bei der Montage eines Gassackmoduls gemäß der Erfindung;
- Figuren 7 und 8 perspektivische Ansichten der zwei entgegengesetzten Enden einer Rohr-Faltvorrichtung;
- Figur 9 eine seitliche Schnittansicht eines Gassackmoduls mit einer alternativen Gassackbefestigung;
- Figur 10 eine perspektivische Ansicht des beim Gassackmodul der Figur 9 verwendeten Befestigungsrings;
- Figur 11 eine seitliche Schnittansicht eines Gassackmoduls mit einer weiteren alternativen Gassackbefestigung;
- Figur 12 eine perspektivische Ansicht des beim Gassackmodul der Figur 11 verwendeten Befestigungsrings;
- Figur 13 eine seitliche Schnittansicht eines Gassackmoduls bei aufgeblasenem Gassack mit einer alternativen Anbringung des Fangbands; und
- Figur 14 eine Draufsicht auf einen ausgebreiteten Gassack mit einer alternativen Gestaltung des Einblasmunds.

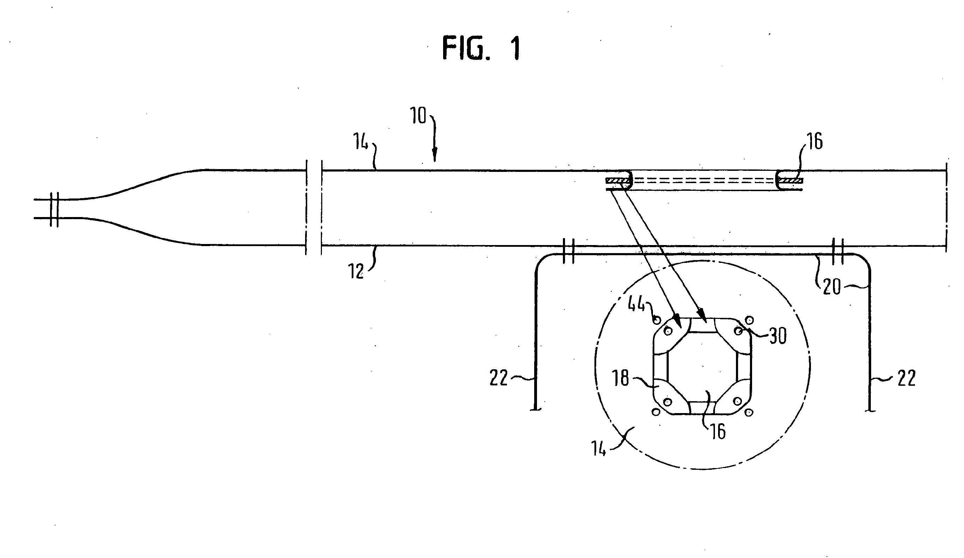

Figur 1 zeigt einen Gassack 10, der aus zwei Gewebezuschnitten 12, 14 gebildet ist. Die beiden Gewebezuschnitte 12, 14 sind an ihren Rändern durch Nähen, Verkleben oder auf andere Weise miteinander verbunden. An einem der Zuschnitte wurde zuvor automatisch ein der späteren Einblasmundkontur entsprechendes Blech-, Kunststoff- oder Drahtteil 16 angebracht, dessen Form aus der umgeklappten Detailansicht der Figur 1 (vom Inneren des Gassacks 10 aus betrachtet) hervorgeht. Durch einen automatisierten Näh- oder Klebevorgang und durch Umklappen von Flügeln 18 wird das Teil 16 am Zuschnitt 14 befestigt.

Am anderen Zuschnitt 12 kann wahlweise außenseitig ein Fangband 20 vorgesehen werden. Das Fangband 20 wird sowohl automatisch zugeschnitten als auch am Zuschnitt 12 angebracht, wobei der Mittelabschnitt des Fangbands 20 angenäht oder angeklebt wird und die beiden Enden 22 des Fangbands 20 lose bleiben.

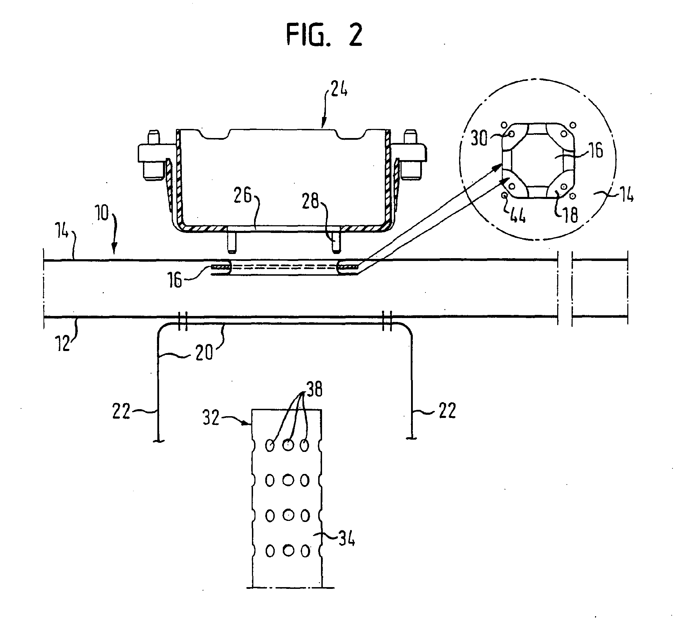

Der Gassack 10 aus Figur 1 wird mit einem Fließband zu einer Faltstation befördert, an der ein topfförmiger Gasgeneratorträger 24 bereitgestellt ist. Der Gassack 10 wird, wie in Figur 2 gezeigt, so positioniert, daß der Einblasmund des Gassacks 10 einer entsprechenden Öffnung 26 des Gasgeneratorträgers 24 genau gegenüberliegt, wobei vom Gasgeneratorträger 24 abstehende Kunststoffstifte 28 in entsprechende Löcher 30 des Gassacks 10 und des Teils 16 eingreifen. Auf der anderen Seite des Gassacks 10 wird zwischen den Fangbandenden 22 eine Rohr-Faltvorrichtung 32 koaxial zum Einblasmund bzw. zur Öffnung 26 im Gasgeneratorträger 24 ausgerichtet.

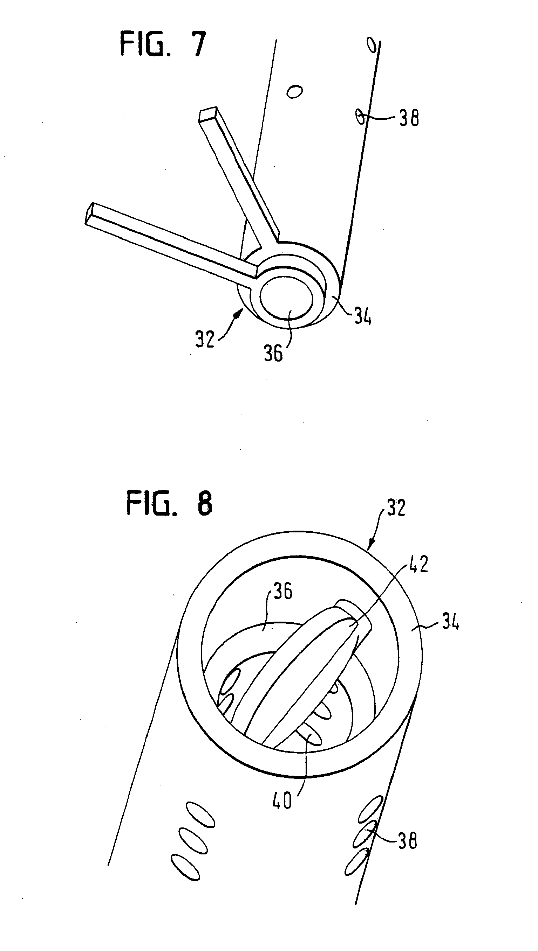

Details der Rohr-Faltvorrichtung 32 sind in den Figuren 7 und 8 zu erkennen. Die Vorrichtung 32 besteht aus einem Außenrohr 34 und einem Innenrohr 36, die beide mit einer Vielzahl von Bohrungen 38 bzw. 40 versehen sind. In dem dargestellten Fall sind die Bohrungen 38, 40 des Außenrohrs 34 und des Innenrohrs 36 in mehreren axialen Reihen angeordnet und können zueinander ausgerichtet werden. Die beiden Rohre 34, 36 sind relativ zueinander sowohl verdrehbar als auch axial verschiebbar. Während das gemäß Figur 2 untere Ende der Rohr-Faltvorrichtung 32 offen ist (siehe Figur 7), ist am oberen Ende eine steuerbare Klappe 42 vorgesehen (siehe Figur 8), mit der die Rohr-Faltvorrichtung 32 geschlossen werden kann.

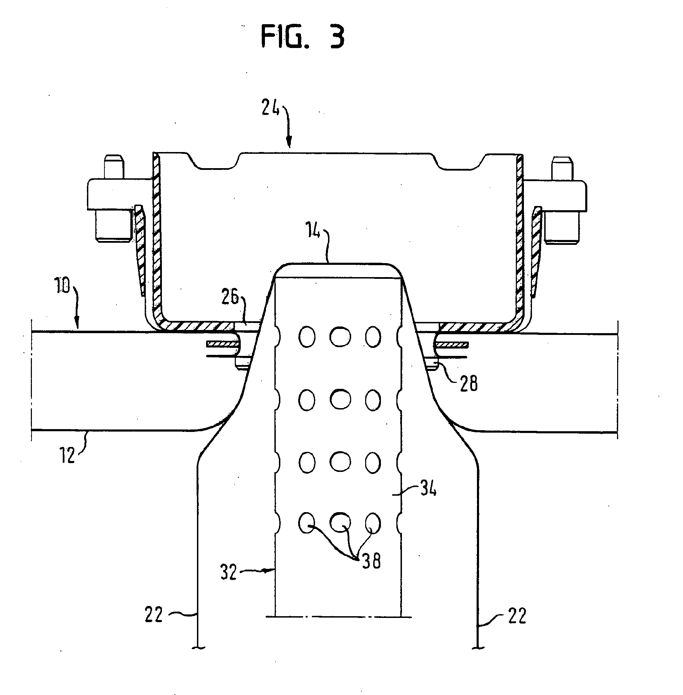

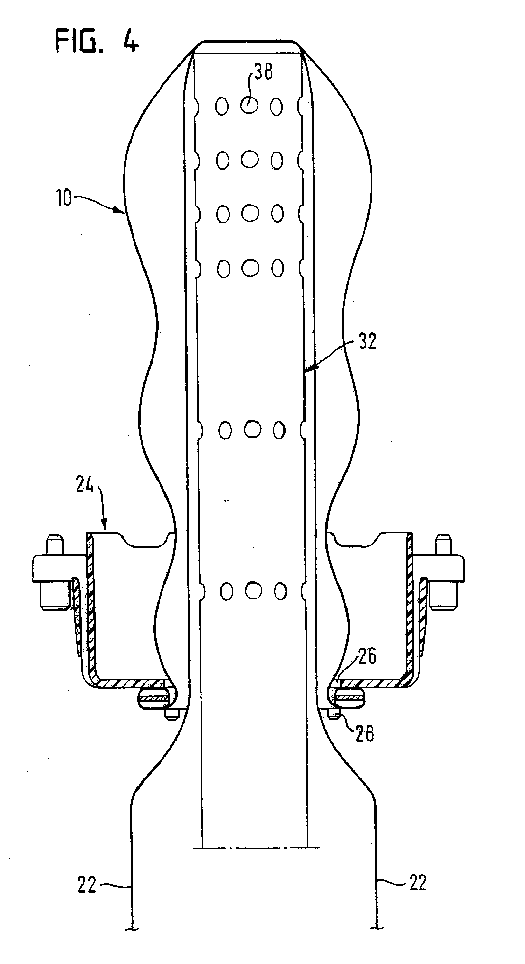

Figur 3 zeigt, wie der Gassack 10 mit Hilfe der Rohr-Faltvorrichtung 32 unter Umstülpung am Einblasmund durch die Öffnung 26 in den Gasgeneratorträger 24 gezogen wird. Dabei werden die vor dem Einschieben der Rohr-Faltvorrichtung 32 noch außerhalb des Einblasmunds befindlichen Löcher 44 des Gassacks 10 automatisch über die Stifte 28 des Gasgeneratorträgers 24 gezogen, die bereits in die Löcher 30 eingreifen. Die Rohr-Faltvorrichtung 32 wird bis zu einer Begrenzung, die sich durch die vertikale Höhe (bezogen auf die Darstellung der Figur 4) des nicht aufgeblasenen und nicht durch das Fangband 20 zurückgehaltenen Gassacks 10 ergibt, nach oben bewegt. Die Zuschnitte 12, 14 sind dann praktisch vollständig durch die Öffnung 26 im Gasgeneratorträger 24 durchgeführt (siehe Figur 4). Die losen Enden 22 des Fangbands 20 sind hingegen länger als der Verschiebeweg der Rohr-Faltvorrichtung 32, so daß die Enden 22 noch aus der Öffnung 26 herausragen.

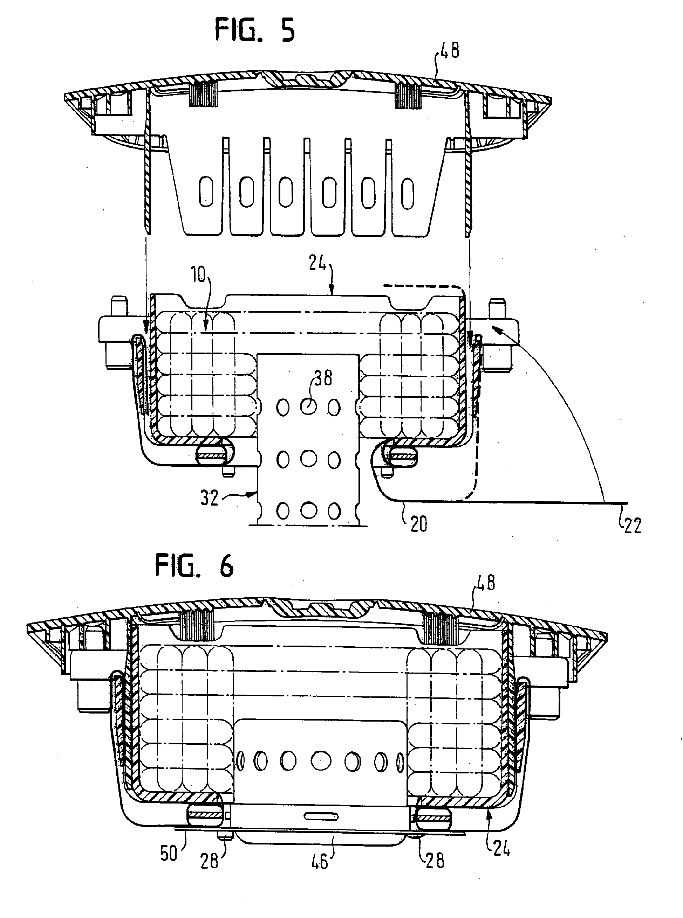

Während die Rohr-Faltvorrichtung 32 am Anschlag anliegt, wird mit Hilfe einer an die Rohr-Faltvorrichtung 32 angeschlossenen Saugpumpe durch das offene untere Ende die im Gassack 10 vorhandene Luft ganz oder teilweise abgesaugt. Die Bohrungen 40 des Innenrohrs 36 werden beim Absaugen zu den Bohrungen 38 des Außenrohrs 34 ausgerichtet. Aufgrund der in axialen Reihen angeordneten Bohrungen 38, 40 entsteht eine Faltung des Gassacks 10 wie bei einem Regenschirm. Durch ein definiertes Verdrehen und/oder axiales Verschieben der beiden Rohre 34, 36 sowie durch eine definierte Ansteuerung der Klappe 42 kann der Gassack beim Herausziehen der immer noch an die Saugpumpe angeschlossenen Rohr-Faltvorrichtung 32 definiert und reproduzierbar in den freien Innenraum des Gasgeneratorträgers 24 hineingefaltet werden, wie in Figur 5 gezeigt ist.

Gegebenenfalls kann die Faltung in einer dafür bereitgestellten axialen Verlängerung der Seitenwand des Gasgeneratorträgers 24 stattfinden, und der gefaltete Gassack 10 kann mit Hilfe einer an den Durchmesser des Gasgeneratorträgers 24 angepaßten Platte oder dergl. niedergedrückt werden, um die gewünschte Packhöhe und -dichte des Gassackpakets zu erreichen. Zudem kann das obere Ende der Rohr-Faltvorrichtung 32 als "Platzhalter" für den später einzusetzenden Gasgenerator 46 dienen.

Die losen Fangbandenden 22 werden bis zu einer vorbestimmten Länge mit der Rohr-Faltvorrichtung 32 herausgezogen und dann fixiert. Diese Länge der Fangbandenden 22 bestimmt die maximale axiale Ausdehnung des Gassacks 10 bei dessen Entfaltung. Die Fixierung kann vorteilhaft durch Verklemmen im Verbund des Gasgeneratorträgers 24 und einer auf diesen aufgesetzten Abdeckkappe 48 erfolgen, so daß ein zusätzliches Verschrauben, Verschweißen oder dergl. entfallen kann.

Zuletzt wird der Gasgenerator 46 in den Gasgeneratorträger 24 eingesetzt, nachdem die Rohr-Faltvorrichtung 32 entfernt wurde (Figur 6). Der Gasgenerator 46 hat unten einen mit Bohrungen versehenen Befestigungsflansch 50, der auf die Stifte 28 gesteckt wird. Der überstehende Abschnitt der Stifte 28 wird durch Ultraschallschweißen oder Heißverstemmen zur Befestigung des Gasgenerators 46 benutzt (siehe rechter Stift 28 in Figur 6), wobei der Gassack 10 mittels des Blech-, Kunststoff- oder Drahtteils 16 sicher zwischen dem Gasgeneratorträger 24 und dem Befestigungsflansch 50 verklemmt ist. Des weiteren ist die äußere Kontur des Teils 16 größer gestaltet als die Durchgangsbohrung 26 des Gasgeneratorträgers 24, so daß der Boden des Gasgeneratorträgers 24 die Funktion eines bisher üblichen Gassackhalteblechs übernimmt, und Kräfte über bekannte Befestigungsarten wie Snap-in- oder Verschraubbefestigungen an das Lenkrad und somit zum Fahrzeug weitergeleitet werden.

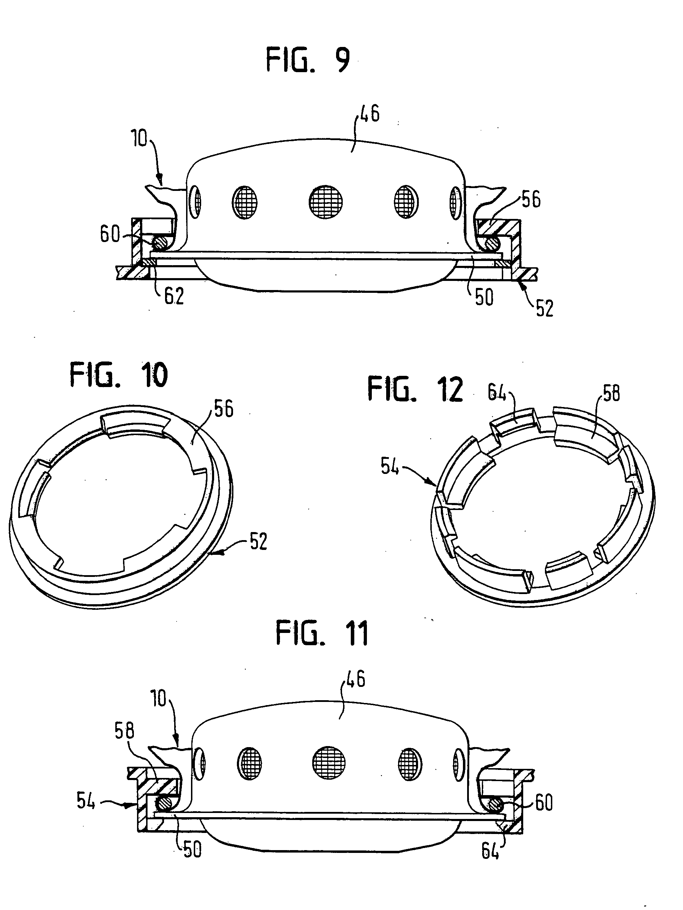

In den Figuren 9 und 11 sind zwei alternative Arten der Befestigung des Gassacks 10 und des Gasgenerators 46 gezeigt. In beiden Fällen werden der Gassack 10 und der Befestigungsflansch 50 des Gasgenerators 46 mittels eines Befestigungsrings 52 bzw. 54 (siehe Figur 10 bzw. 12) befestigt, wobei der Befestigungsring 52 bzw. 54 Bestandteil des Gasgeneratorträgers 24 sein kann. Der Befestigungsring 52 bzw. 54 bildet eine Art Schacht, der nach oben durch Stege 56 bzw. 58 des Befestigungsrings 52 bzw. 54 eingeengt ist. Der Gassack 10 ist bei diesen Ausführungsformen jeweils um einen Drahtring 60 gewickelt, der zwischen den Stegen 56 bzw. 58 und dem Flansch 50 des Gasgenerators 46 gehalten wird. Nach unten wird der Schacht entweder durch einen Sicherungsring 62 (Figur 9) oder durch Klipse 64 (Figur 11) eingeengt. Es kann auch vorgesehen sein, nur den Gassack 10 oder nur den Gasgenerator 46 auf diese Weise zu befestigen.

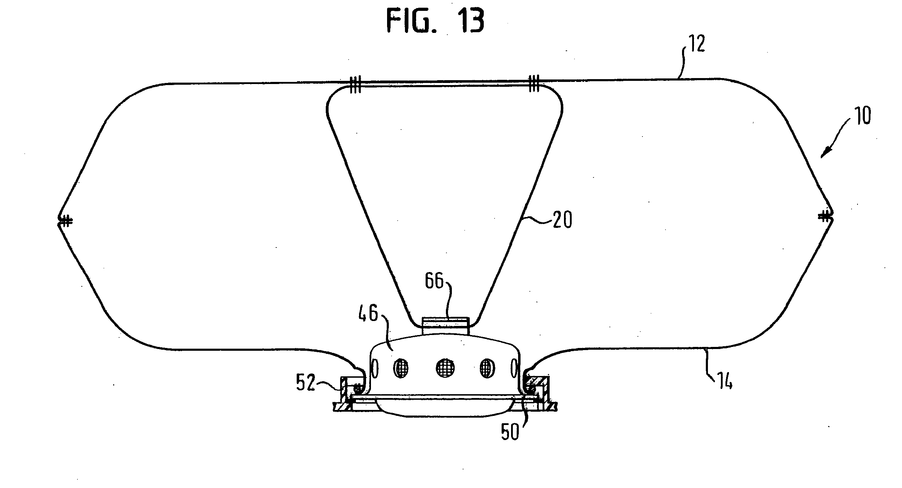

Figur 13 zeigt eine alternative Möglichkeit zur Anbringung des Fangbands 20. Das Fangband 20 ist in diesem Fall nicht mit losen Enden, sondern als geschlossene Schlaufe ausgebildet. Das Fangband 20 wird in einen auf oder über dem Gasgenerator 46 angebrachten Bügel 66, Haken oder dergl. eingehängt. Der Bügel 66 kann an den Gasgenerator 46 angeformt bzw. einstückig mit diesem ausgebildet sein, oder als eine Art Klammer am Gasgenerator 46 oder am Gasgeneratorträger 24 befestigt sein. Während des Faltvorgangs kann die Fangbandschlaufe, die kürzer als die Höhe des maximal eingeschobenen Gassacks 10 ist, in der Rohr-Faltvorrichtung 32 z.B. durch den Unterdruck gehalten, geführt und beim Herausziehen der Rohr-Faltvorrichtung 32 wieder mit nach außen gebracht werden, um dann am Bügel 66 eingehängt zu werden.

Die beschriebenen Schritte zur Montage des Gassackmoduls sind allesamt für eine automatisierte Montage geeignet.

Die beschriebenen Verfahren zur Faltung des Gassacks 10 bzw. zur Montage des Gassackmoduls können grundsätzlich auch ohne Absaugen von Luft aus dem Gassack 10 (nach dem axialen Verschieben der Rohr-Faltvorrichtung 32) durchgeführt werden. In diesem Fall kann die Rohr-Faltvorrichtung 32 einfacher aufgebaut sein (ohne Bohrungen) und muß nicht an eine Saugpumpe angeschlossen werden.

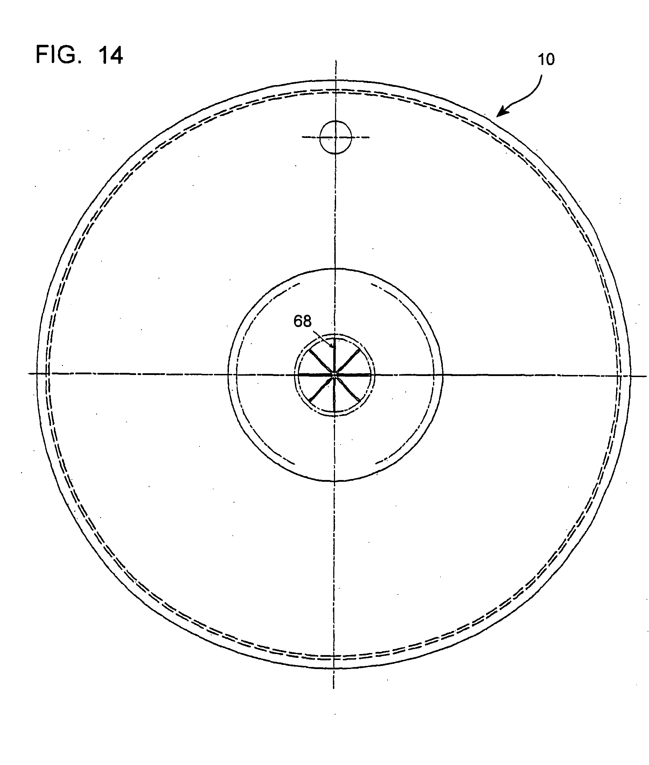

Figur 14 zeigt einen Gassack 10, dessen Einblasmundbereich 68 geschlitzt ist und der insbesondere für eine Faltung bzw. Montage geeignet ist, bei der keine Luft abgesaugt wird.

## Patentansprüche

1. Vorrichtung zum Falten eines Gassacks (10), mit einer Positioniereinrichtung für den Gassack (10) und einer axial verschiebbaren Rohr-Faltvorrichtung (32), wobei die Positioniereinrichtung den Gassack (10) so positioniert, daß der Gassack (10) bei einer axialen Bewegung der Rohr-Faltvorrichtung (32) über die Rohr-Faltvorrichtung (32) gestülpt bzw. umgestülpt wird.

2. Vorrichtung nach Anspruch 1, **dadurch gekennzeichnet, daß** die Rohr-Faltvorrichtung (32) ein Außenrohr (34) mit mehreren Bohrungen (38) aufweist und an eine Saugpumpe anschließbar ist.

3. Vorrichtung nach Anspruch 2, **dadurch gekennzeichnet daß** die Rohr-Faltvorrichtung ferner ein Innenrohr (36) mit mehreren Bohrungen (40) aufweist, wobei das Innenrohr (36) relativ zum Außenrohr (34) bewegbar ist, insbesondere verdrehbar und/oder axial verschiebbar.

4. Vorrichtung nach Anspruch 2 oder 3, **dadurch gekennzeichnet, daß** ein Ende der Rohr-Faltvorrichtung (32) durch eine ansteuerbare Klappe (42) verschließbar ist.

5. Verfahren zur Faltung eines mit einem Einblasmund versehenen Gassacks (10) mit der Vorrichtung nach einem der vorhergehenden Ansprüche, wobei das Verfahren folgende Schritte aufweist:
- Positionieren der Rohr-Faltvorrichtung (32) auf der dem Einblasmund entgegengesetzten Seite des Gassacks (10);
- axiales Verschieben der Rohr-Faltvorrichtung (32) durch den Einblasmund, so daß sich der Gassack (10) über die Rohr-Faltvorrichtung (32) stülpt bzw. umstülpt; und
- Herausziehen der Rohr-Faltvorrichtung (32) aus dem Einblasmund.

6. Verfahren nach Anspruch 5, **dadurch gekennzeichnet, daß** vor dem Herausziehen der Rohr-Faltvorrichtung (32) im Gassack (10) vorhandene Luft abgesaugt wird, insbesondere durch die Rohr-Faltvorrichtung (32).

7. Verfahren nach Anspruch 6 mit einer Vorrichtung nach Anspruch 2, **dadurch gekennzeichnet, daß** während des Luftabsaugens und des Herausziehens der Rohr-Faltvorrichtung 32 das Innenrohr 36 relativ zum Außenrohr (34) bewegt wird.

8. Verfahren nach Anspruch 6 oder 7 mit einer Vorrichtung nach Anspruch 3, **dadurch gekennzeichnet, daß** während des Luftabsaugens und des Herausziehens der Rohr-Faltvorrichtung (32) die Klappe (42) betätigt wird.

9. Verfahren zur Montage eines Gassackmoduls, bei dem ein Gassack (10) gemäß dem Verfahren nach einem der Ansprüche 5 bis 8 gefaltet wird, wobei durch das axiale Verschieben der Rohr-Faltvorrichtung (32) der Gassack (10) durch eine Öffnung (26) in eine Aufnahme, vorzugsweise einen Gasgeneratorträger (24), hineingezogen wird.

10. Verfahren nach Anspruch 9, **dadurch gekennzeichnet, daß** im Bereich des Einblasmunds Löcher (30) vorgesehen sind, die vor dem axialen Verschieben der Rohr-Faltvorrichtung (32) über entsprechende, an der Aufnahme vorstehende Stifte (28) gezogen werden.

11. Verfahren nach Anspruch 10, **dadurch gekennzeichnet, daß** beim axialen Verschieben der Rohr-Faltvorrichtung (32) weitere, außerhalb der Löcher (30) vorgesehene Löcher (44) ebenfalls über die Stifte (28) gezogen werden.

12. Verfahren nach Anspruch 9 oder 10, **dadurch gekennzeichnet, daß** der Gassack (10) und/oder ein Gasgenerator (46) mittels eines Befestigungsrings (52; 54) befestigt werden.

13. Verfahren nach einem der Ansprüche 9 bis 12, **dadurch gekennzeichnet, daß** der Gassack (10) bei noch nicht vollständig herausgezogener Rohr-Faltvorrichtung (32) in Richtung der Öffnung (26) zusammengedrückt wird.

14. Verfahren nach einem der Ansprüche 9 bis 13, **dadurch gekennzeichnet, daß** an die dem Einblasmund entgegengesetzte Seite des Gassacks (10) ein Fangband (20) angenäht wird, dessen Enden (22) lose und so lang bemessen sind, daß sie beim axialen Verschieben der Rohr-Faltvorrichtung (32) nicht vollständig durch die Öffnung (26) gezogen werden.

15. Verfahren nach Anspruch 14, **dadurch gekennzeichnet, daß** die aus der Öffnung (26) ragenden losen Enden (22) des Fangbands (20) am Gassackmodul befestigt werden.

16. Verfahren nach Anspruch 15, **dadurch gekennzeichnet, daß** die Aufnahme ein Gasgeneratorträger (24) ist und die losen Enden (22) des Fangbands (20) durch Verklemmen in einem Verbund des Gasgeneratorträgers (24) und einer auf den Gasgeneratorträger (24) aufgesetzten Abdeckkappe (48) befestigt werden.

17. Verfahren nach einem der Ansprüche 9 bis 13, **dadurch gekennzeichnet, daß** an den Gassack (10) ein Fangband (20) in Form einer Schlaufe angenäht und in einen am Gassackmodul angebrachten Bügel (66) oder dergl. eingehängt wird.

18. Gassackmodul, das gemäß dem Verfahren nach einem der Ansprüche 9 bis 17 montiert ist.

19. Gassackmodul nach Anspruch 18, **gekennzeichnet durch** einen Gassack (10), dessen Einblasmundbereich (68) geschlitzt ist.
